# EUROPÄISCHE PATENTSCHRIFT

(11) **EP 2 025 986 B1**
(45) Veröffentlichungstag und Bekanntmachung des Hinweises auf die Patenterteilung: **27.07.2011**
(21) Anmeldenummer: 08010249.4
(22) Anmeldetag: 05.06.2008
(51) Int. Cl.: F16L 9/133, F16L 9/19, F16L 11/127

(54) **Rohreinheit umfassend mindestens zwei Rohre**
Pipe unit containing at least two pipes
Unité de tuyau comprenant au moins deux tuyaux

(30) Priorität: 14.08.2007 DE 102007038297
(43) Veröffentlichungstag der Anmeldung: 18.02.2009
(73) Patentinhaber: egeplast Werner Strumann GmbH & Co. KG, 48268 Greven (DE)
(72) Erfinder: Hesse, Holger, 48268 Greven (DE); Späth, Thorsten, Dr., 48282 Emsdetten (DE)
(74) Vertreter: Fritz, Edmund Lothar

(56) Entgegenhaltungen:
- WO-A-2005/119112
- DE-A1- 19 630 268
- DE-A1- 19 913 012
- DE-U1-202005 016 324
- JP-A- 2 120 587
- JP-A- 2002 267 059
- US-A- 4 709 730
- US-A1- 2005 121 094
- Kunststoffrohrverband KRV: "Gewichtsliste für Rohrleitungssysteme in der Gas- und Trinkwasserversorgung aus PE 100 nach DIN EN 1555-2/DIN EN 12201-2", Internet , 31 March 2008 (2008-03-31), Retrieved from the Internet: URL:http://www.krv.de/images/stories/docs/ 04.03.08_krv_gewichtsliste_gas_wasser.pdf [retrieved on 2010-03-24]

## Beschreibung

Die vorliegende Erfindung betrifft eine Rohreinheit umfassend mindestens zwei Rohre, nämlich mindestens ein erstes Rohr, welches wenigstens eine äußere Schutzschicht oder Mantelschicht aus Kunststoff aufweist, sowie umfassend mindestens ein zweites Rohr, welches einen kleineren Durchmesser aufweist als das erste Rohr, wobei dieses mindestens eine zweite kleinere Rohr von der Schutzschicht oder Mantelschicht des ersten Rohrs umhüllt wird, wodurch das erste Rohr und das zweite Rohr eine Rohreinheit bilden, wobei das erste Rohr ein mindestens zweischichtiges Rohr ist, dessen Mantelschicht aus Kunststoff einen ebenfalls aus Kunststoff bestehenden Rohrkern über den überwiegenden Teil des Umfangs abstandslos und konzentrisch umgibt und wobei die Mantelschicht das zweite kleinere Rohr an seinem äußeren Umfang überzieht und dieses von der Mantelschicht im schubkraftfesten Verbund zwischen der Mantelschicht und dem Rohrkern gehalten wird. Gegenstand der vorliegenden Erfindung ist weiterhin ein Verfahren zur gleichzeitigen grabenlosen Verlegung einer solchen Rohreinheit mit mindestens zwei Rohren im Erdreich.

Es sind heute eine ganze Reihe von Verfahren bekannt, mittels derer Rohre oder Leitungen im Erdreich grabenlos verlegt werden. Diese Verfahren gewinnen gegenüber der herkömmlichen Verlegungsmethode im offenen Verfahren immer mehr an Bedeutung. Auch zur Sanierung bestehender älterer Rohrleitungen kann die grabenlose Verlegung zum Einsatz kommen. Bekannt ist hier das sogenannte Berstlining-Verfahren, bei dem die Zerstörung eines beispielsweise keramischen Altrohrs unter gleichzeitigem Einzug eines neuen Kunststoffrohrs erfolgt. Ein typisches Verfahren dieser Art ist zum Beispiel in der DE. 10 2005 052 653 A1 beschrieben. Allerdings wird hier nur ein neues Rohr gleichzeitig eingezogen, welches dazu noch in einem Strang mit einer Vielzahl von Rohrabschnitten verlegt wird. Es handelt sich hier somit nicht um eine endlose Verlegung eines Rohrs von vergleichsweise großer Länge.

Es sind auch bereits Verfahren bekannt geworden, bei denen man eine bereits im Erdreich vorhandene ältere Gas- oder Trinkwasserleitung quasi als Schutzrohr verwendet, um in diese zum Beispiel ein Glasfaserkabel einzuziehen, wobei man vorhandene Zugänge zu der bereits liegenden Leitung nutzt. Ein Verfahren dieser Art wird auf den Internet-Seiten der Firma Nodig-Bau beschrieben unter www.nodig-bau.de, unter dem Stichwort "Optical fibers in gas- and drinking water pipes"

Bei den herkömmlichen Verfahren zur gleichzeitigen grabenlosen Verlegung mehrerer Rohre, Kabel oder Leitungen im Erdreich geht man in der Regel so vor, dass man entsprechend große Bohrungen vornimmt und anschließend mittels einer geeigneten Zugvorrichtung ein ganzes Rohrbündel gleichzeitig einzieht. Die Rohre bzw. Leitungen werden dazu untereinander und/oder mit der Zugvorrichtung verbunden.

Ein Verfahren zur grabenlosen Parallelverlegung mehrerer Rohre wird in der DE 199 01 536 A1 beschrieben. Die gemeinsame Verlegung mehrerer Rohre mittels gesteuerter Horizontalbohrtechnik erfordert die Erstellung relativ großer Bohrlochdurchmesser und ist daher im Allgemeinen auf bestimmte Bodentypen beschränkt. Bei der Parallelverlegung werden bisher mehrere Rohrleitungen mit einer Art Klemmvorrichtung gebündelt und dann in einem Arbeitsgang verwindungsfrei und lagerichtig mit definiertem Abstand eingezogen. Bei den bekannten Methoden ist die Parallelität der gemeinsam verlegten Rohre nicht immer gewährleistet. In der genannten Druckschrift wird ein recht aufwändiges Verfahren beschrieben, bei dem zunächst in einer Richtung entgegen der Verlegerichtung eine Pilotbohrung vorgenommen wird. Dann werden zwei zu verlegende Rohre in eine Microtunneling-Maschine eingezogen, die zwei Vortriebseinheiten umfasst, die über eine Verbindungseinrichtung gekoppelt sind. Mit dieser Verbindungseinrichtung ist ein zusätzliches Begleitrohr verbunden. Der Vortrieb der gesamten Einheit erfolgt dann entlang der Trasse der Pilotbohrung in entgegengesetzter Arbeitsrichtung.

Um die zuvor genannten Probleme bei der gleichzeitigen Parallelverlegung insbesondere von Rohren und Kabeln, Rohren und Leitungen oder Rohren und Leerrohren für Kabel und Leitungen, insbesondere ein Verdrehen oder Beschädigen einzelner Rohre oder Kabel zu vermeiden, bevorzugt man in diesen Fällen meist noch die Verlegung in der offenen Bauweise.

In dem Deutschen Gebrauchsmuster DE 83 21 728.2 U1 sind Rohreinheiten mit den Merkmalen der eingangs genannten Gattung beschrieben. Es handelt sich um Mehrkanalrohrleitungen für Fernheizungssysteme beschrieben mit einem Außen- bzw. Mantelrohr aus Faser- bzw. Asbestzement und mehreren Innenrohren, die in dem Außenrohr im Abstand voneinander wärmebrückenfrei angeordnet sind. Die Hohlräume zwischen den Rohren werden mit einem elastischen Kunststoffschaum ausgeschäumt. In diesen Schaumstoff können auch kleinere Rohre wie zum Beispiel Entlüftungsrohre oder Entwässerungsrohre eingebettet sein. Da diese Rohrleitungssysteme für Fernheizungen vorgesehen sind, ist es ein wichtiges Anliegen, das das Medium (in der Regel heißes Wasser) führende Innenrohr zur Wärmedämmung gut zu isolieren, wozu der Kunststoffschaum dient. Durch dieses Ausschäumen geht zum einen ein erheblicher Teil des Rohrquerschnitts verloren. Für den Medientransport steht nur der verringerte freie Querschnitt des Innenrohrs zur Verfügung. Das Innenrohr (Medientransportrohr) besteht in der Regel aus Metall und soll sogar in dem Außenrohr in axialer Richtung verschiebbar gelagert sein. Es besteht somit bei einer solchen Anordnung von Rohren zwischen dem Innenrohr und dem Außenrohr (Mantelrohr) kein Schubkraftverbund, den man jedoch bei einer grabenlosen Verlegung einer Rohrleitung im unterirdischen Vortrieb benötigt. Weiterhin handelt es sich bei diesen bekannten Rohren nicht um normgerechte druckfeste Rohre, deren Verwendung für Anwendungen im Druckrohrbereich (druckfeste Rohre für den Transport von Gas, Wasser oder Abwasser) in der Regel vorgeschrieben ist und deren genormte Eigenschaften festgelegt sind. Für die genannten Anwendungen kommen daher die aus dieser Druckschrift bekannten Rohranordnungen nicht in Betracht.

In der DE 201 06 589 U1 sind Huckepackleitungen für den Einsatz in Kanalisationsantagen beschrieben, bei denen in oder unter einem Rohr ein weiteres Rohr kleineren Durchmessers angeordnet ist, das durch eine Ummantelung aus Beton geschützt ist. Beide Rohrleitungen sind hier gemäß einer Variante durch eine Styroporschicht getrennt. Schon aufgrund der äußeren Umrissform, die sich durch die rechteckige Ummantelung des kleineren Rohrs ergibt, ist ein solches Rohr nicht normgerecht. Die Herstellung des Rohrverbundsystems ist recht aufwändig. Es kommt keine Anwendung für Druckleitungen in Betracht, sondern allenfalls für Abwasserleitungen, die im Freigefälle verlegt werden, zum Beispiel zur Entwässerung an Autobahnen. Da im Verbindungsbereich eine Styroporschicht angeordnet ist, ist auch hier kein ausreichender Schubkraftverbund der beiden Rohrleitungen gegeben, so dass die grabenlose Verlegung nach den gängigen Methoden ausscheiden dürfte. Bei einer Variante werden Seitenzuläufe vorgesehen, die sich quer zur Rohrachse und durch die Wandung des äußeren Rohrs erstrecken. Der freie Innenquerschnitt des Mantelrohrs wird durch eine Betonummantelung des Innenrohrs erheblich verringert. Die Verlegung der Rohrleitungen erfolgt nicht im Verbund, sondern zunächst wird die größere Rohrleitung verlegt und dann in diese die kleinere Rohrleitung eingezogen, wonach dann noch die Betonummantelung eingebracht werden muss. Diese Rohrleitungen sind nicht normgerecht und deren Verlegung ist aufwändig.

Aus der FR 2 678 348 A1 sind Rohre bekannt, die innenseitig eine über einen Spalt zum Innenraum des Außenrohrs offene teilzylindrische Anformung aufweisen, die dazu dient, um später ein Kabel in das durch den Hohlraum der Anformung gebildete kleinere Leerrohr einzuziehen. Das Außenrohr selbst ist hier nur einschichtig. Durch die für das Leerrohr vorgesehene innere Anformung eignet sich ein solches Rohr nicht für ein Druckrohr. Da die Anformung aus dem Material des Außenrohrs geformt ist, ergibt sich in diesem Bereich eine Spannungsspitze. Das Rohr entspricht daher nicht den Normen für Druckrohre.

In der DE 197 45 130 A1 ist ein Verfahren für die grabenlose Verlegung einer Rohrleitung beschrieben, wobei die Rohrleitung aus einem Mantelrohr und einem Produktrohr besteht und zur Verlegung durch das Erdreich vorgepresst wird. Hier besteht jedoch das Mantelrohr aus Stahlbeton und das Produktrohr, das für den Transport von Gas vorgesehen ist, besteht aus Stahl. Der Ringraum zwischen Mantelrohr und Produktrohr wird mit einem elastischen Material ausgefüllt, bei dem es sich um einen Polyurethanverbundschaum handelt. Weiterhin hat das innere Produktrohr noch eine Korrosionsschutz-Umhüllung. Im Betonquerschnitt des Mantelrohrabschnitts sind Kabelkanäle eingegossen. Die Herstellung einer solchen Rohrleitung ist recht aufwändig und kostenintensiv. Sie hat ein hohes Gewicht, wodurch sich entsprechende Transportkosten ergeben. Die Wandstärke des Rohrs ist vergleichsweise groß, so dass sich ein ungünstiges Verhältnis zwischen Außendurchmesser und verfügbarem Innenquerschnitt ergibt, was für die grabenlose Verlegung nachteilig ist, da die aufzubringenden Presskräfte mit dem Außendurchmesser zunehmen.

Die US 2005/121094 A 1 beschreibt eine Rohreinheit der eingangs genannten Gattung, bei der eine spiralförmige Nut in eine tragende Kernschicht eines ersten Rohrs eingebracht wird. In diese Nut wird dann ein kleineres zweites Rohr, welches insbesondere eine Hydraulikoder Pneumatikleitung sein kann, eingelegt und die Kernschicht wird anschließend mit einer zweiten tragenden Rohrschicht überzogen. Das kleinere Rohr wird dabei in den Kunststoff der tragenden Schicht unlösbar eingebettet. Durch das Einbringen der Nut in die tragende Kernschicht werden deren Eigenschaften beeinträchtigt, so dass das Rohr nicht mehr die Anforderungen an ein normgerechtes Druckrohr erfüllt.

Die JP 2002 267059 A beschreibt einen ähnlichen Stand der Technik wie das zuvor beschriebene Dokument. Dort wird in eine der Schichten eines Kernrohrs eine Längsnut eingebracht, in die eine elektrische Leitung eingelegt wird. Anschließend wird das Rohr mit einer Schutzschicht überzogen. Die Kernschicht wird auch hier durch die Nut geschwächt. Die elektrische Leitung kann nach der Fertigstellung des Rohrs nicht mehr entfernt werden. Aufgabe der vorliegenden Erfindung ist es, eine Rohreinheit umfassend mindestens zwei Rohre der eingangs genannten Gattung zur Verfügung zu stellen, welche eine Verwendung des ensten Rohres als normgerechtes Druckrohr zulässt, die einfach und kostengünstig herstellbar ist und eine gleichzeitige Verlegung als Rohreinheit mit vertretbarem Aufwand ermöglicht, ohne dass die Gefahr besteht, dass die einzelnen Rohre ihre relative Lage zueinander bei der Verlegung verändern.

Die Lösung dieser Aufgabe liefert eine Rohreinheit der eingangs genannten Gattung mit den Merkmalen des Hauptanspruchs.

Erfindungsgemäß ist vorgesehen, dass das zweite Rohr ein Leerrohr für ein Kabel oder eine Leitung ist und dass der Rohrizern des dass ersten Rohrs ein normgerechtes Druckrohr ist.

Da erfindungsgemäß mindestens ein erstes Rohr, welches wenigstens eine äußere Schutzschicht oder Mantelschicht aufweist, gemeinsam mit mindestens einem zweiten Rohr verlegt wird, welches ebenfalls von der Schutzschicht oder Mantelschicht des ersten Rohrs umhüllt wird, bilden das erste Rohr und das zweite Rohr eine schubkraftfeste Rohreinheit. Das mindestens eine zweite Rohr ist in die Schutzschicht oder Mantelschicht des ersten Rohrs eingeschlossen, wodurch zwei Vorteile erreicht werden. Zum einen ist das zweite Rohr bei der grabenlosen Verlegung durch die Schutzschicht des ersten Rohrs gegen Beschädigung geschützt. Zum anderen wird durch die Schutzschicht eine feste kraftschlüssige Einfassung des zweiten Rohrs erzielt, die das zweite Rohr in seiner relativen Lage zum ersten Rohr an letzterem sicher fixiert, so dass ein Verschieben beider Rohre relativ zueinander beim Einziehen in das Erdreich sicher ausgeschlossen ist. Dies wird dabei mit vergleichsweise einfachen Mitteln erreicht und hat gegenüber dem zuvor genannten Stand der Technik den Vorteil, dass keinerlei Verbindungsmittel notwendig sind, um beide Rohre beim Verlegevorgang relativ zueinander zu fixieren.

Erfindungsgemäß wird also eine Rohreinheit aus mindestens zwei kraftschlüssig miteinander verbundenen Rohren in einem Verfahren zur grabenlosen Verlegung in das Erdreich verbracht.

Das zweite Rohr ist ein Leerrohr für ein Kabel oder eine Leitung. Das Kabel oder die Leitung kann dann zu einem späteren Zeitpunkt durch dieses Leerohr geschoben werden. Aber auch in dem nicht zur Erfindung gehorenden Fall, in dem direkt ein Rohr mit Kabel oder Leitung als Einheit grabenlos verlegt wird, ist das Kabel bzw. die Leitung durch die Schutzschicht (Mantelschicht) vor Beschädigung beim Einziehen in das Erdreich geschützt.

Ein weiterer wesentlicher Vorteil der Erfindung liegt darin, dass man eine kraftschlüssige Rohreinheit schafft, die ein gleichzeitiges Einziehen mehrerer Rohre im grabenlosen Verfahren ermöglicht, dabei aber die einzelnen Rohre, insbesondere das erste Rohr nicht so verändert, dass es nicht mehr den gültigen Normen entspricht. Würde man stattdessen beispielsweise eine Rohreinheit dadurch schaffen, dass man ein zweites Rohr oder eine Leitung oder ein Kabel innerhalb der Wandung des ersten Rohrs unterbringt, würde dies zu einer Schwächung der Wandstärke führen, so dass das erste Rohr nicht mehr normgerecht sein würde. Dies hätte wesentliche Konsequenzen für Fragen der Zulassung, Gewährleistung und dergleichen. Bei der erfindungsgemäßen Lösung wird hingegen das Kernrohr des ersten Rohrs nicht verändert, so dass dieses weiterhin alle bisherigen Funktionen erfüllt, seine Kennwerte behält und normgerecht ist. Die wesentlichen Eigenschaften wie beispielsweise die Druckfestigkeit ergeben sich bei Rohren für Entsorgung- bzw. Versorgungsleitungen durch das Kernrohr. Die Schutzschicht oder Mantelschicht dient in erster Linie als Schutz gegen äußere mechanische Einflüsse und bei Abrieb im Bereich dieser Schutzschicht sollten die wesentlichen Kennwerte des Rohrs erhalten bleiben. Einer Veränderung außerhalb des Kernrohrs kommt daher in diesem Rahmen keine für die Hauptfunktion des Rohrs wesentliche Bedeutung zu.

Das erste Rohr ist erfindungsgemäß ein normgerechtes Druckrohr für den Transport eines unter Druck stehenden Mediums wie Gas, Wasser oder Abwasser (im Gegensatz zu im Freigefälle verlegten Abwasserleitungen, die keine Druckrohre in diesem Sinne sind.) Als normgerechte Rohre im Sinne der vorliegenden Erfindung werden insbesondere diejenigen Rohre angesehen, die die Vorschriften der Normen EN 1555-2 (betrifft Kunststoff-Rohrleitungssysteme für die Gasversorgung), EN 12201-2 (betrifft Kunststoff-Rohrleitungssysteme für die Wasserversorgung) und EN 13244-2 (betrifft Kunststoff-Rohrleitungssysteme für erd- und oberirdisch verlegte Druckrohrleitungen für Brauchwasser, Entwässerung und Abwasser) erfüllen. Diese Normen regeln insbesondere die Anforderungen an Mindestwanddicken, Zeitstand-Innendruckverhalten, Bruchdehnung, Widerstand gegen langsames Risswachstum und schnelle Rissfortpflanzung, thermische Stabilität, Längsschrumpf, Witterungsbeständigkeit, chemische Widerstandsfähigkeit gegen Chemikalien sowie das Durchmesser-Wanddickenverhältnis in Abhängigkeit vom Nenndruck.

Vorzugsweise bestehen erfindungsgemäß der Rohrkern und/oder die Mantelschicht aus einem harten Kunststoff, insbesondere einem Polyolefin. Ebenso kann bevorzugt auch das zweite kleinere Rohr aus einem Material der vorgenannten Art bestehen. Als besonders bevorzugtes Material kommen beispielsweise für alle Teilbereiche der Rohreinheit Polyethylen oder Polypropylen in Betracht. Für diese Werkstoffe existieren entsprechende Normen, die die Anforderungen an die Materialeigenschaften der Rohre festlegen, auch wenn es sich um Druckrohre handelt. Der Begriff "Druckrohre" ist dabei hierin so zu verstehen, dass ein unter Druck stehendes flüssiges oder gasförmiges Medium durch die Rohrleitung gefördert werden kann. Als Werkstoffe für die erfindungsgemäßen Rohre kommen aber außer Polyolefinen auch andere geeignete Thermoplaste in Betracht.

Es wurde bereits erwähnt, dass bei den aus dem Stand der Technik bekannten Rohren die äußere Rohrwandung des ersten Rohrs teilweise aus Beton besteht oder aus Schaumstoffschichten, die zur Wärmedämmung verwendet werden. In diese Schichten wird dann das zweite Rohr in irgendeiner Form eingebettet. Bei einer solchen Lösung ergibt sich eine vergleichsweise große Wandstärke des Rohrs, insbesondere da Teile der äußeren Rohrwandung keine tragenden Schichten sind und für die Druckbelastbarkeit des Rohrs keinen Beitrag leisten. Der verbleibende freie Innenquerschnitt ist demgemäß im Verhältnis zum Auβendurchmesser der gesamten Rohrleitung vergleichsweise klein. Im Gegensatz dazu schlägt die vorliegende Erfindung vor, dass bevorzugt mindestens das Kernrohr aus einem harten Kunststoff mit ausreichend hoher Druckfestigkeit besteht, so dass die Wandstärke des gesamten ersten Rohrs im Verhältnis zu dessen Innendurchmesser geringer ausgeführt werden kann und sich ein größerer lichter Querschnitt für den Durchfluss des bevorzugt unter Druck stehenden Mediums ergibt. Insbesondere beträgt das Verhältnis zwischen dem lichten Innendurchmesser und der gesamten Wandstärke des mehrschichtigen Rohrs (Rohrkern + Mantelschicht) wenigstens 5:1, vorzugsweise wenigstens 7:1.

Gegenstand der vorliegenden Erfindung ist weiterhin ein Verfahren zur Herstellung einer Rohreinheit mit den Merkmalen des Anspruchs 7, bei dem bei der Herstellung der Rohreinheit zunächst ein Rohrkern des ersten Rohrs für sich allein druckklassen- und normgerecht aus Kunststoff extrudiert wird, dann das zweite Rohr an dem Rohrkern positioniert und gegebenenfalls fixiert wird und danach die Schutzschicht oder Mantelschicht aufextrudiert oder aufgeschrumpft wird, so dass auch das zweite Rohr von dieser Mantelschicht umhüllt wird.

Eine auf diese Weise hergestellte Rohreinheit eignet sich zur gleichzeitigen grabenlosen Verlegung mehrerer im Verbund vorliegender Rohre mit vergleichsweise, ohne dass die Gefahr besteht, dass die einzelnen Rohre, Kabel oder Leitungen ihre relative Lage zueinander bei der Verlegung verändern, wobei die Rohreinheit ein äußeres Rohr umfasst, welches als normgerechtes Druckrohr geeignet ist.
Auch herstellungstechnisch ist das erfindungsgemäße Verfahren vorteilhaft, da es im Prinzip keine wesentlichen zusätzlichen Arbeitsgänge erfordert. Auch bei einem herkömmlichen Rohr wird bislang oft bereits auf das Kernrohr eine Schutzschicht aufextrudiert. Bei diesem Arbeitsgang ergibt sich nun als einzige Änderung, dass vor diesem Schritt das zweite Rohr an dem ersten Rohr positioniert und gegebenenfalls fixiert wird, beispielsweise mit Klebeband, und danach die Schutzschicht über beide Rohre gezogen wird.
Bei der grabenlosen Verlegung der erfindungsgemäßen Rohreinheit ist es beispielsweise so, dass eine vorhandene Altrohrleitung zerstört und gleichzeitig die Rohreinheit eingezogen wird, ähnlich wie bei dem oben erwähnten Berstlining. Man kann auch stattdessen bei der Erneuerung die Altleitung herausziehen und die bestehende Trasse nutzen, um gleichzeitige die neue Rohreinheit einzuziehen. Beispielsweise kann man eine alte schadhafte Wasser-, Gas- oder Abwasserleitung auf diese Weise entfernen und eine neue Leitung aus Kunststoff einziehen mitsamt einem zusätzlichen Kabel für die Telekommunikation oder einem Leerrohr für ein solches Kabel. Man spart auf diese Weise einen Verlegungsvorgang ein, insbesondere eine sonst häufig übliche Verlegung des Kabels in offener Bauweise, wozu ein Graben hergestellt werden müsste.

Das erfindungsgemäße Verfahren bietet weiterhin die Möglichkeit, Mehrsparten-Hausanschlüsse wirtschaftlich zu sanieren oder neu zu erstellen. Es ist beispielsweise auch möglich, eine Versorgungsleitung gleichzeitig mit einer Signalleitung für die Mess- und Regeltechnik grabenlos zu verlegen. Die erfindungsgemäße Rohreinheit kann dabei mehr als zwei Rohre, Kabel oder Leitungen umfassen.
Erfindungsgemäß ist es so, dass bei der Rohreinheit das erste Rohr, welches das Kernrohr umfasst, im Durchmesser um größenordnungen größer ist als das zweite Rohr oder die weiteren Rohre nämlich einen Faktor 3, besonders bevorzugt um einen Faktor 4 oder mehr. Es ist der häufigere Anwendungsfall, dass ein größeres Rohr, zum Beispiel eine Versorgungs- oder Entsorgungsrohrleitung gleichzeitig mit einem kleineren Leerrohr und einem Kabel, zum Beispiel einem Glasfaser- oder Steuerungskabel oder einer Leitung verlegt wird. Die Erfindung ist aber nicht auf diese Anwendungsfälle beschränkt. Es liegt auf der Hand, dass es geometrisch problemlos möglich ist, ein oder mehrere kleinere Rohre in der Umhüllung eines im Durchmesser größeren Rohrs unter zu bringen. Das oder die kleineren Rohre werden so positioniert, dass sie außen an der Wandung des größeren ersten Rohrs anliegen und danach wird die Einheit

mit der Schutzschicht oder Mantelschicht überzogen. In der Regel besteht letztere aus Kunststoff und wird aufextrudiert. Beim Erkalten ergibt sich eine gewisse Schrumpfung der Schutzschicht, wodurch sich eine feste Einfassung der innerhalb der Umhüllung liegenden kleineren Rohre ergibt. Es entsteht ein fester Verbund und es wird sicher verhindert, dass sich eines der kleineren Rohre durch die beim Verlegevorgang herrschenden Kräfte gegenüber dem Hauptrohr verdreht oder verschiebt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte perspektivische Ansicht einer erfindungsgemäßen Rohreinheit mit zwei Rohren;

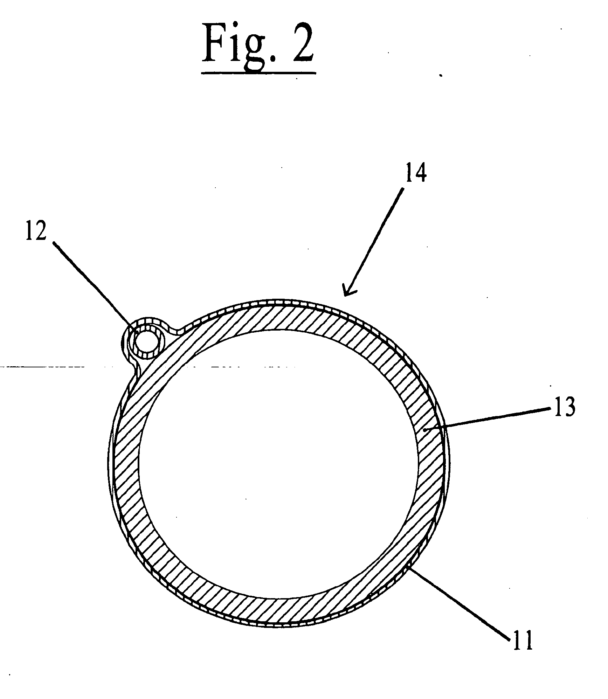

Figur 2 eine vergrößerte Querschnittansicht durch die erfindungsgemäße Rohreinheit entlang der Schnittlinie II-II von Figur 1.

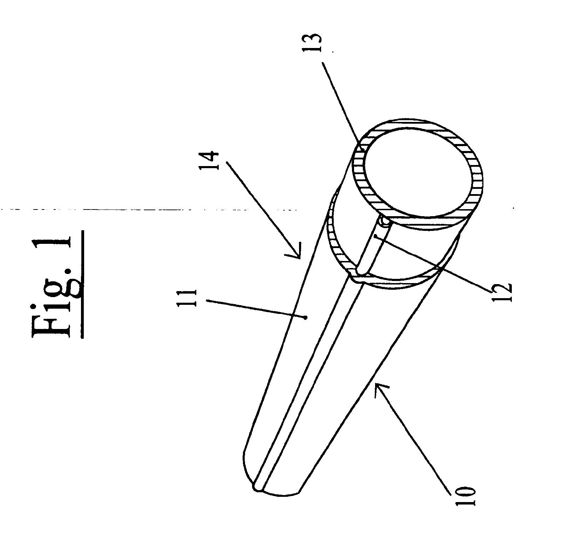

Zunächst wird auf die Figur 1 Bezug genommen. Diese zeigt eine schematisch vereinfachte perspektivische Ansicht eines Abschnitts einer beispielhaften Rohreinheit 14 gemäß der vorliegenden Erfindung. Beispielsweise handelt es sich um eine Versorgungsleitung wie zum Beispiel eine Gasleitung oder eine Wasserleitung aus Kunststoff. Diese wird erfindungsgemäß durch grabenlose Verlegung im Erdreich verlegt. Mittels einer hier nicht dargestellten Antriebseinheit kann beispielsweise die Rohreinheit entlang einer bereits bestehenden Trasse einer Altleitung, die dabei gleichzeitig entfernt wird, in das Erdreich eingezogen werden.

Die erfindungsgemäße Rohreinheit 14 umfasst im Falle des vorliegenden Ausführungsbeispiels eine erste größere Rohrleitung 10 und eine mit dieser verbundene zweite kleinere Rohrleitung 12. Die erste größere Rohrleitung 10 wird aus mindestens zwei Wandschichten aufgebaut sein, nämlich einem inneren Kernrohr 13 aus Kunststoff, welches die geforderten mechanischen Eigenschaften wie Druckfestigkeit etc. liefert und aus einer das Kernrohr 13 umgebenden Schutzschicht 11 oder einem Mantelrohr, welches bei herkömmlichen Rohren dieser Art durch Coextrusion mit dem Kernrohr in einem Arbeitsgang hergestellt werden kann oder aber auch nachträglich auf das Kernrohr aufextrudiert wird. Die Aufgabe der Schutzschicht 11 besteht darin, das Kernrohr 13 vor äußeren mechanischen Einflüssen oder auch Witterungseinflüssen zu schützen, insbesondere eine Schicht gegen Abrieb oder Kratzer zu bilden, da das Rohr bei der grabenlosen Verlegung in das Erdreich eingezogen wird, wobei entsprechende Belastungen auftreten. Die Schutzschicht 11 besteht ebenfalls aus Kunststoff, der entsprechende Eigenschaften aufweist und dessen Zusammensetzung aus den vorgenannten Gründen meist von derjenigen des Kernrohrs abweicht.

Ein solches zweischichtiges Rohr 10 umfassend mindestens ein Kernrohr 13 sowie mindestens eine Schutzschicht 11 wird erfindungsgemäß zur Erstellung einer in das Erdreich einziehbaren Rohreinheit 14 verwendet. Dazu wird ein in dem vorliegenden Ausführungsbeispiel im Durchmesser um einiges kleineres Rohr 12, welches beispielsweise ein Leerrohr für eine Signalleitung oder für ein Kabel, zum Beispiel ein Glasfaserkabel für Telekommunikationszwecke, ist, nach der Extrusion des Kernrohrs 13 außen an dessen Wandung positioniert, in einer Weise, dass die Rohrachse beider Rohre 13 und 12 etwa parallel verlaufen. Falls es notwendig ist wird das kleinere zweite Rohr 12, welches ebenfalls bevorzugt aus Kunststoff besteht, mit Klebeband oder durch andere geeignete Befestigungsmittel an dem größeren Kernrohr fixiert. Anschließend erfolgt ein weiterer Arbeitsgang, in dem die Schutzschicht 11 zum Beispiel durch einen Extrusionsvorgang über die Einheit aus Kernrohr 13 und kleineres Rohr 12 aufgebracht wird. Da beim Aufextrudieren dieses Überziehen der beiden Rohre 13, 12 mit heißem Kunststoff erfolgt, schrumpft dieser Kunststoff beim Erkalten und zieht sich somit fest über die beiden Rohre, wodurch eine kraftschlüssige Verbindung geschaffen wird und eine erfindungsgemäße Rohreinheit 14 aus Kernrohr 13, zweitem Rohr 12 und gemeinsam diese fest umhüllender Schutzschicht 11 geschaffen wird, die dann in dieser Form als Rohreinheit grabenlos in einem einzigen Verlegevorgang im Erdreich verlegt werden kann.

Gemäß einem weiteren nicht zur Erfindung gehörenden Beispiel kann das zweite kleinere Rohr 12 statt eines Leerrohrs für ein Kabel oder eine Leitung wie in dem vorliegenden Ausführungsbeispiel auch beispielsweise eine elektrische Leitung aus Kupferlitze und Isolierung sein, oder ein Glasfaserkabel oder dergleichen. Es liegt auf der Hand, dass diese Kabel oder Leitungen sehr empfindlich sind und für sich allein nicht grabenlos in das Erdreich eingezogen werden könnten. In dem Verfahren werden sie jedoch durch die Schutzschicht 11 gegen mechanische Einflüsse geschützt und durch die Steifigkeit des quasi als Trägerrohr fungierenden Kernrohrs 13 erhalten sie Stabilität in axialer Richtung und in Querrichtung, so dass ein gemeinsames Einziehen eines Kabels oder einer Leitung als Rohreinheit 14 problemlos möglich ist.

### Bezugszeichenliste

- 10: erstes Rohr
- 11: Schutzschicht
- 12: zweites Rohr
- 13: Rohrkern
- 14: Rohreinheit

## Patentansprüche

1. Rohreinheit umfassend mindestens zwei Rohre,
a) nämlich ein erstes Rohr (10), welches wenigstens eine äußere Schutzschicht (11) oder Mantelschicht aus Kunststoff aufweist,
b) sowie umfassend mindestens ein zweites Rohr (12), welches einen kleineren Durchmesser aufweist als das erste Rohr,
c) wobei dieses mindestens eine zweite kleinere Rohr (12) von der Schutzschicht oder Mantelschicht des ersten Rohrs umhüllt wird,
d) wodurch das erste Rohr (10) und das zweite Rohr (12) eine Rohreinheit (14) bilden,
e) wobei das erste Rohr (10) ein mindestens zweischichtiges Rohr ist, dessen Mantelschicht (11) aus Kunststoff einen ebenfalls aus Kunststoff bestehenden Rohrkern (13) über den überwiegenden Teil des Umfangs abstandslos und konzentrisch umgibt
f) und wobei die Mantelschicht (11) das zweite kleinere Rohr (12) an seinem äußeren Umfang überzieht
g) und dieses von der Mantelschicht im schubkraftfesten Verbund zwischen der Mantelschicht (11) und dem Rohrkern (13) gehalten wird,
h) wobei das zweite Rohr (12) ein Leerrohr für ein Kabel oder eine Leitung ist
i) und der Rohrkern (13) des ersten Rohres (10) für sich allein ein normgerechtes Druckrohr ist
j) wobei das erste Rohr im Durchmesser um Größenordnungen größer ist als das zweite Rohr, nämlich um einen Faktor 3 oder mehr
k) und wobei das erste Rohr (10) ein Gasrohr, Wasserrohr oder Abwasserdruckrohr ist.

2. Rohreinheit nach Anspruch 1, **dadurch gekennzeichnet, dass** das erste Rohr (10) ein Gasrohr, Wasserrohr oder Abwasserdruckrohr ist, welches die Vorschriften der Normen EN 1555-2 (betrifft Kunststoff-Rohrleitungssysteme für die Gasversorgung), EN 12201-2 (betrifft Kunststoff-Rohrleitungssysteme für die Wasserversorgung) und EN 13244-2 (betrifft Kunststoff-Rohrleitungssysteme für erd- und oberirdisch verlegte Druckrohrleitungen für Brauchwasser, Entwässerung und Abwasser) im Hinblick auf Mindestwanddicken, Zeitstand-Innendruckverhalten, Bruchdehnung, Widerstand gegen langsames Risswachstum und schnelle Rissfortpflanzung, thermische Stabilität, Längsschrumpf, Witterungsbeständigkeit, chemische Widerstandsfähigkeit gegen Chemikalien sowie das Durchmesser-Wanddickenverhältnis in Abhängigkeit vom Nenndruck erfüllt.

3. Rohreinheit nach Anspruch 1 oder 2, **dadurch gekennzeichnet, dass** der Rohrkern (13) und/oder die Mantelschicht (11) aus einem harten Kunststoff, insbesondere einem Polyolefin mit ausreichend hoher Druckfestigkeit bestehen.

4. Rohreinheit nach einem der Ansprüche 1 bis 3, **dadurch gekennzeichnet, dass** das zweite kleinere Rohr (12) aus einem harten Kunststoff, insbesondere einem Polyolefin besteht.

5. Rohreinheit nach einem der Ansprüche 1 bis 4, **dadurch gekennzeichnet, dass** die Mantelschicht (11) auf den Rohrkern (13) aufextrudiert oder aufgeschrumpft ist.

6. Rohreinheit nach einem der Ansprüche 1 bis 5, **dadurch gekennzeichnet, dass** das Verhältnis zwischen dem lichten Innendurchmesser und der gesamten Wandstärke des mehrschichtigen Rohrs (Rohrkern 13 + Mantelschicht 11) wenigstens 5:1, vorzugsweise wenigstens 7:1 beträgt.

7. Verfahren zur Herstellung einer Rohreinheit nach einem der Ansprüche 1 bis 6, **dadurch gekennzeichnet, dass** bei der Herstellung der Rohreinheit (14) zunächst ein Rohrkern (13) des ersten Rohrs (10) für sich allein druckklassen- und normgerecht aus Kunststoff extrudiert wird, dann das zweite Rohr (12) an dem Rohrkern positioniert und gegebenenfalls fixiert wird und danach die Schutzschicht (11) oder Mantelschicht aufextrudiert oder aufgeschrumpft wird, so dass auch das zweite Rohr von dieser Mantelschicht umhüllt wird.

8. Verfahren zur Verlegung einer Rohreinheit nach einem der Ansprüche 1 bis 6 im Erdreich, **dadurch gekennzeichnet, dass** eine Rohreinheit (14) grabenlos verlegt wird, bei der das erste Rohr (10) eine Versorgungs- oder Entsorgungsrohrleitung bildet und bei der das zweite Rohr (12) ein Leerrohr für eine Signalleitung ist.

## Claims

1. Pipe unit comprising at least two pipes
a) namely a first pipe (10) having at least one outer protective layer (11) or mantle layer made of plastic
b) as well as comprising at least one second pipe (12) which has a smaller diameter than the first pipe
c) whereby this at least one second smaller pipe (12) is surrounded by the protective layer or mantle layer of the first pipe
d) whereby the first pipe (10) and the second pipe (12) form a pipe unit (14),
e) whereby the first pipe (10) is an at least two-layer pipe, the plastic mantle layer (11) of which surrounds a pipe core (13), also made of plastic, over the predominant part of the circumference at a distance and concentrically
f) and whereby the mantle layer (11) covers the second smaller pipe (12) on its external circumference
g) and this is held by the mantle layer in a force-resistant bond between the mantle layer (11) and the pipe core (13),
h) whereby the second pipe (12) is an empty pipe for a cable or a lead
i) and the pipe core (13) of the first pipe (10) is in itself a standard pressure pipe
j) whereby the diameter the first pipe is greater in size than the second pipe, namely by a factor of 3 or more
k) and whereby the first pipe (10) is a gas pipe, water pipe or waste water pipe.

2. Pipe unit in accordance with claim 1 **characterised in that** the first pipe (10) is a gas pipe, water pipe or waste water pipe, which meets the requirement of the standards EN 15545-2 (relating to plastic pipeline systems for the supply of gas), EN 12201-2 (relating to plastic pipeline systems for the supply of water) and EN 13244-2 (relating to plastic pipeline systems for underground and aboveground pressure pipeline systems for waste water, drainage and sewage) in terms of the minimum thickness, creep-internal pressure behaviour, elongation at break, resistance to slow crack development and rapid crack propagation, thermal stability, longitudinal shrinkage, weather resistance, resistance to chemicals as well as the diameter - wall thickness ratio as a function of the nominal pressure.

3. Pipe unit in accordance with claim 1 or 2 **characterised in that** the pipe core (13) and/or the mantle layer (11) is made of a hard plastic, more particularly a polyolefin with sufficiently high compressive strength.

4. Pipe unit in accordance with any one of claims 1 to 3 **characterised in that** the second smaller pipe (12) is made of a hard plastic, more particularly a polyolefin.

5. Pipe unit in accordance with any one of claims 1 to 4 **characterised in that** the mantle layer (11) is extruded or shrunk onto the pipe core (13).

6. Pipe unit in accordance with any one of claims 1 to 5 **characterised in that** the ratio between the clear internal diameter and the overall wall thickness of the multiple-layer pipe (pipe core 13 + mantle layer 11) is at last 5:1, preferably 7:1.

7. Method of producing a pipe unit in accordance with any one of claims 1 to 6 **characterised in that** during the production of the pipe unit (14) a pipe core (13) of the first pipe (10) is extracted by itself from plastic in compliance with pressure classes and standards, after which the second pipe (12) is positioned on, and if necessary fixed to the pipe core and then the protective layer (11) or mantle layer is extruded or shrunk on so that the second pipe is surrounded by this mantle layer.

8. Method of laying a pipe unit in accordance with any one of claims 1 to 6 in the ground **characterised in that** a pipe unit (14) is laid without a trench, in which the first pipe (10) forms a supply and removal pipeline and the second pipe (12) is an empty pipe for a signal line.

## Revendications

1. Unité de conduite comprenant au moins deux conduites,
a) notamment une première conduite (10) comportant au moins une couche protectrice extérieure (11) ou enveloppe en matière plastique,
b) et comportant au moins une deuxième conduite (12) présentant un diamètre inférieur à celui de la première conduite,
c) où cette au moins une conduite plus petite (12) est entourée par la couche protectrice ou enveloppe de la première conduite,
d) la première conduite (10) et la deuxième conduite (12) formant ainsi une unité de conduite (14),
e) où la première conduite (10) est une conduite à au moins deux couches, dont la couche extérieure (11) en matière plastique entoure, concentriquement et sans jeu, un noyau de conduite (13) également constitué de matière plastique, sur la majeure partie du pourtour,
f) et où la couche extérieure (11) recouvre la deuxième conduite plus petite (12) sur son pourtour extérieur,
g) et celle-ci est tenue entre la couche extérieure (11) et le noyau de conduite (13), par la couche extérieure, en une liaison résistante à la force de poussée,
h) où la deuxième conduite (12) est une gaine pour un câble ou une ligne,
i) et le noyau de conduite (13) de la première conduite (10) est à lui seul une conduite sous pression conforme,
j) où la première conduite présente un diamètre supérieur de plusieurs ordres de grandeur à celui de la deuxième conduite, notamment selon un facteur 3 ou plus,
k) et où la première conduite (10) est une conduite de gaz, une conduite d'eau ou une conduite d'évacuation d'eau.

2. Unité de conduite selon la revendication 1, **caractérisée en ce que** la première conduite (10) est une conduite de gaz, une conduite d'eau ou une conduite d'évacuation d'eau, répondant aux dispositions des normes EN 1555-2 (concernant les systèmes de conduites en matière plastique pour l'alimentation en gaz), EN 12201-2 (concernant les systèmes de conduites en matière plastique pour l'alimentation en eau), et EN 13244-2 (concernant les systèmes de conduites en matière plastique pour des conduites sous pression, posées en l'air ou sous terre, pour les eaux usées, l'évacuation d'eau et l'eau résiduelle), en termes d'épaisseur de paroi minimale, de comportement de fluage en pression interne, l'allongement à la rupture, la résistance à l'apparition progressive de fissures et la propagation rapide de fissures, la stabilité thermique, le rétrécissement en longueur, la résistance aux intempéries, la résistance aux produits chimiques et le rapport diamètre-épaisseur de paroi, en fonction de la pression nominale.

3. Unité de conduite selon la revendication 1 ou 2, **caractérisée en ce que** le noyau de conduite (13) et/ou la couche extérieure (11) sont constitués d'une matière plastique dure, en particulier d'une polyoléfine avec une résistance suffisante à pression.

4. Unité de conduite selon l'une des revendications 1 à 3, **caractérisée en ce que** la deuxième conduite plus petite (12) est constituée d'une matière plastique dure, en particulier d'une polyoléfine.

5. Unité de conduite selon l'une des revendications 1 à 4, **caractérisée en ce que** la couche extérieure (11) est extrudée ou frettée sur le noyau de conduite (13).

6. Unité de conduite selon l'une des revendications 1 à 5, **caractérisée en ce que** le rapport entre le diamètre intérieur et la totalité de l'épaisseur de paroi de la conduite à plusieurs couches (noyau de conduite 13 + couche extérieure 11) est d'au moins 5:1, de préférence d'au moins 7:1.

7. Procédé pour la fabrication d'une unité de conduite selon l'une des revendications 1 à 6, **caractérisé en ce que** lors de la fabrication de l'unité de conduite (14), un noyau de conduite (13) de la première conduite (10) est tout d'abord extrudé séparément à partir d'une matière plastique, conformément aux normes et aux classes de pression, puis la deuxième conduite (12) est positionnée sur le noyau de conduite et éventuellement fixée, puis la couche protectrice (11) ou enveloppe extérieure est sur-extrudée ou frettée, de sorte que la deuxième conduite est également entourée de cette enveloppe extérieure.

8. Procédé pour la pose d'une unité de conduite selon l'une des revendications 1 à 6 sous terre, **caractérisé en ce qu'**une unité de conduite (14) est posée sans tranchée, dans laquelle la première conduite (10) forme une conduite d'alimentation ou une conduite d'évacuation, et dans laquelle la deuxième conduite (12) est une gaine pour une ligne de signalisation.
